# EUROPEAN PATENT APPLICATION

(11) **EP 4 847 550 A1**
(43) Date of publication of application: **02.12.2026**
(21) Application number: 26169762.7
(22) Date of filing: 31.03.2026
(51) Int. Cl.: C08G 69/32, C08G 69/26, H01M 4/62

(54) **POLYAMIDE POLYMER FOR BINDER, AND SLURRY, ELECTRODE, SEPARATOR, AND SECONDARY BATTERY INCLUDING SAME**

(30) Priority: 07.04.2025 KR 20250044709
(71) Applicant: Hansol Chemical Co., Ltd, Seoul 06169 (KR)
(72) Inventor: YOON, Nam-Sun, Jeonbuk-do 55321, (KR); KIM, Kwang-In, Jeonbuk-do 55321, (KR); SEONG, Hoon-Moh, Jeonbuk-do 55321, (KR); OH, Sang-Yeop, Jeonbuk-do 55321, (KR); LEE, So-Jeong, Jeonbuk-do 55321, (KR); KIM, Hee-Jeong, Jeonbuk-do 55321, (KR); AN, Su-Hyeon, Jeonbuk-do 55321, (KR); KWON, Se-Man, Jeonbuk-do 55321, (KR)
(74) Representative: Louis Pöhlau Lohrentz

(57) **Abstract**

Proposed are a polyamide polymer including a first monomer unit containing a diamine residue having at least one carbonyl group on a backbone or side chain thereof, and a slurry, an electrode, a separator, and a secondary battery including the same.

## Description

### BACKGROUND OF THE INVENTION

### 1. Technical Field

The present disclosure relates to a polyamide polymer for a binder, and a slurry, an electrode, a separator, and a secondary battery including the same.

### 2. Description of the Related Art

With high energy density, lithium secondary batteries are being extensively used in electrical, electronic, telecommunication, and computer fields. Furthermore, the application fields of lithium secondary batteries are being expanded to include high-capacity secondary batteries for hybrid vehicles and electric vehicles, in addition to small lithium secondary batteries for portable electronic devices.

In order to provide lithium secondary batteries with high energy density and excellent life characteristics, it is desirable to increase the content of electrode active materials and conductive additives in electrodes while reducing the binder content.

However, such reduced binder content results in deterioration of the dispersibility of the electrode active material and/or the conductive additive, the binding strength, and the flexibility of the electrode active material layer. As a result, the electrode active material may detach from the current collector during charge and discharge, thereby deteriorating cycle characteristics.

Accordingly, binders capable of securing the dispersibility of the electrode active material and/or the conductive additive, the binding strength to the electrode plate, and the flexibility of the electrode plate in the electrode with a small content are required.

For example, fluorine-based binders such as polyvinylidene fluoride (PVDF) free of polar functional groups exhibit low swelling in organic electrolytes, easily maintain the electrode structure during battery operation, and can improve the dispersibility of the active material.

However, PVDF fails to provide sufficient dispersibility of conductive additives, binding strength to electrode plates, and flexibility of electrode plates. In particular, when exposed to basic conditions for a long period of time, PVDF may generate HF gas, resulting in deterioration of stability, which is problematic.

In addition, non-fluorine-based binders such as hydrogenated acrylonitrile-butadiene binders ensure improved dispersibility of conductive additives and flexibility of electrode plates compared to fluorine-based binders, but still fail to provide sufficient binding strength.

Therefore, there is a need for binders capable of overcoming the limitations of conventional technologies as described above, simultaneously providing improved binding strength and flexibility, exhibiting excellent stability, and improving the life characteristics of lithium secondary batteries.

### [Document of Related Art]

### [Patent Document]

(Patent Document 1) Korean Patent Application Publication No. 10-2016-0040125

### SUMMARY

Hence, the present disclosure aims to provide a polyamide polymer for an electrode binder capable of improving the electrochemical properties and cycle characteristics of a secondary battery by applying, to a binder including a conventional polyamide polymer, a polyamide polymer for a binder including a first monomer unit containing a diamine residue having at least one carbonyl group on a backbone or side chain thereof, thereby preventing detachment of an electrode caused by lithium-ion migration through improved binding properties.

In addition, the present disclosure aims to provide a binder that improves the charge/discharge efficiency and life of a secondary battery.

The present disclosure aims to provide a slurry composition that improves the properties of a secondary battery by using the polyamide polymer for the electrode binder.

Furthermore, the present disclosure aims to provide an electrode and a separator to which the slurry composition is applied and which exhibit excellent performance, and a low-cost, high-performance secondary battery including the same.

However, the problems to be solved by the present application are not limited to the aforementioned description, and other problems not mentioned can be clearly understood by those skilled in the art from the following description.

In one aspect of the present application, a polyamide polymer including
a first monomer unit containing a diamine residue having at least one carbonyl group on a backbone or side chain thereof
is provided.

In another aspect of the present application, a binder including the polyamide polymer
is provided.

In a further aspect of the present application, a slurry including the binder and
an electrode active material
is provided.

In yet another aspect of the present application, an electrode including a current collector and
an electrode active material layer formed on the current collector, the electrode active material layer including the binder,
is provided.

In yet another aspect of the present application, a separator including a porous substrate coated with a slurry composition including the binder
is provided.

In yet another aspect of the present application, a secondary battery including the binder
is provided.

A binder of the present disclosure can exhibit excellent binding properties, thereby enhancing the electrochemical properties of a secondary battery, and can activate lithium-ion migration to reduce the internal resistance of the battery, thereby improving the capacity retention rate of the secondary battery.

In addition, the binder of the present disclosure can improve the charge/discharge efficiency and life of the secondary battery.

Furthermore, the improved binding strength of the binder for an electrode of the present disclosure can reduce the amount of the binder used while increasing the amounts of an active material and a conductive additive, thereby providing a lithium secondary battery with high energy density at a low cost.

### BRIEF DESCRIPTION OF THE DRAWING

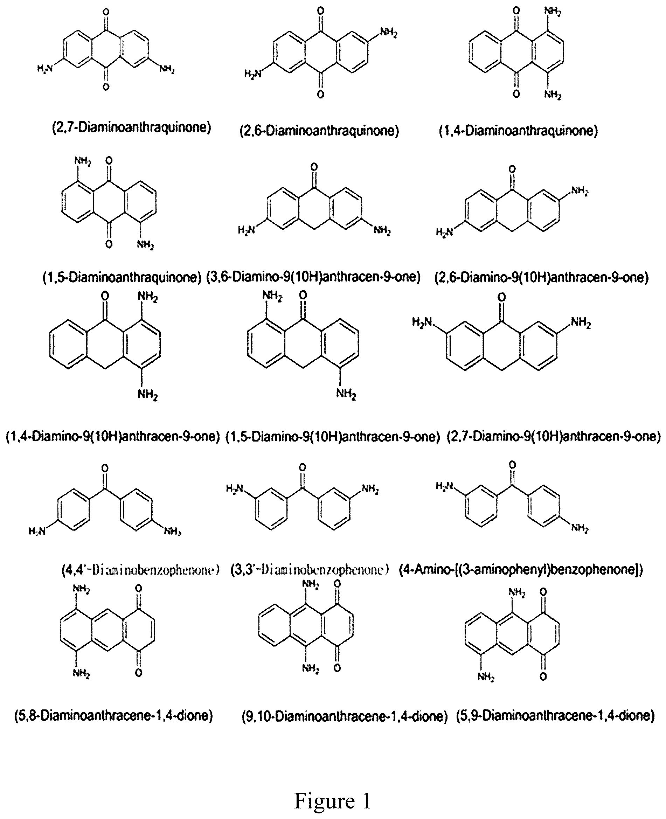

FIG. 1 is a diagram illustrating examples of diamine monomers containing at least one carbonyl group and two or more aromatic rings.

### DESCRIPTION OF THE PREFERRED EMBODIMENTS

Hereinafter, the action and effect of the present disclosure will be described in more detail through specific embodiments of the present disclosure. However, these embodiments are provided only for illustrative purposes of the present disclosure, and the scope of the present disclosure is not limited thereby.

Before discussing the details, it should be noted that all terms or words used herein and in the appended claims are not to be construed as being limited to general or dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present application.

As used herein, the singular expressions are intended to include the plural forms unless the context clearly indicates otherwise. It will be further understood that the terms "comprise", "include", "have", and the like when used herein, are intended to specify the presence of stated features, integers, steps, constituent elements, or combinations thereof but do not preclude the possibility of the presence or addition of one or more other features, integers, steps, constituent elements, or combinations thereof.

As used herein, the expression "a to b" to represent a numerical range is defined as ≥ a and ≤ b.

A polyamide polymer according to one aspect of the present application may include: a first monomer unit containing a diamine residue having at least one carbonyl group on a backbone or side chain thereof.

In the meantime, the backbone refers to the main chain forming the basic skeleton of the polyamide polymer, and the side chain refers to a branched-chain structure additionally attached to the backbone. The first monomer unit necessarily includes one or more carbonyl groups, regardless of where it is present in the backbone or side chain within the structure of the polyamide polymer.

In one embodiment of the present application, the polyamide polymer may be formed by polymerization of an aliphatic compound, an aromatic compound, or a combination thereof.

In one embodiment of the present application, the first monomer unit may be formed by polymerization of an aliphatic compound, an aromatic compound, or a combination thereof.

In one embodiment of the present application, the first monomer unit may be formed by polymerization of a diamine monomer containing at least one carbonyl group and two or more aromatic rings.

In the meantime, the aromatic ring within the diamine monomer may be located on the backbone or side chain thereof, and may form a core structure having aromaticity. However, this monomer may include an aliphatic portion, as well as the aromatic ring, and thus may have the form of a mixed aromatic-aliphatic compound.

An additional carbonyl group introduced into the backbone or side chain of the polyamide polymer may form a coordination bond with a metal ion or metal oxide present on the electrode surface. Such a coordination bond may enhance the binding strength between the binder and the electrode while increasing the interaction with the electrolyte by promoting hydrogen bonding due to the high polarity of the carbonyl group. As a result, the interfacial stability between the electrode and the binder is improved, thereby effectively suppressing detachment or separation of the electrode and leading to improved electrochemical performance and durability.

In one embodiment of the present application, the first monomer unit

may be formed by polymerization of an anthraquinone-based diamine monomer, an anthracenone-based diamine monomer, a benzophenone-based diamine monomer, an anthracene-1,4-dione-based diamine monomer, or a combination thereof.

In one embodiment of the present application, the anthraquinone-based diamine monomer may be 2,7-diaminoanthraquinone, 2,6-diaminoanthraquinone, 1,4-diaminoanthraquinone (DAAQ), 1,5-diaminoanthraquinone, or a combination thereof.

For example, the anthraquinone-based diamine monomer may be DAAQ, 1,5-diaminoanthraquinone, or a combination thereof.

In the meantime, the anthraquinone-based diamine monomer may be DAAQ.

The anthraquinone-based diamine monomer contains two carbonyl groups within the anthraquinone backbone, and thus may form a coordination bond with the metal ion or metal oxide on the electrode surface, thereby enhancing the binding strength between the electrode and the binder.

In one embodiment of the present application, the anthracenone-based diamine monomer may be 3,6-diamino-9(10H)-anthracen-9-one, 2,6-diamino-9(10H)-anthracen-9-one, 1,4-diamino-9(10H)-anthracen-9-one, 1,5-diamino-9(10H)-anthracen-9-one, 2,7-diamino-9(10H)-anthracen-9-one, or a combination thereof.

For example, the anthracenone-based diamine monomer may be 1,4-diamino-9(10H)-anthracen-9-one, 1,5-diamino-9(10H)-anthracen-9-one, 2,7-diamino-9(10H)-anthracen-9-one, or a combination thereof.

The anthracenone-based diamine monomer

has a structure based on 9(10H)-anthracen-9-one, and may increase the number of coordination bonding sites with the electrode by introducing an additional carbonyl group, thus enhancing the binding strength with the electrode and interfacial stability.

In one embodiment of the present application, the benzophenone-based diamine monomer may be 4,4'-diaminobenzophenone (DBP), 3,3'-diaminobenzophenone, 4-amino-[(3-aminophenyl)benzophenone], or a combination thereof.

For example, the benzophenone-based diamine monomer may be DBP, 3,3'-diaminobenzophenone, or a combination thereof.

In the meantime, the benzophenone-based diamine monomer may be DBP.

The benzophenone-based diamine monomer contains a central carbonyl group within the benzophenone backbone, and thus may form a coordination bond with the metal ion or metal oxide on the electrode surface, thereby improving the binding strength and durability of the electrode.

In one embodiment of the present application, the anthracene-1,4-dione-based diamine monomer may be 5,8-diaminoanthracene-1,4-dione, 9,10-diaminoanthracene-1,4-dione, 5,9-diaminoanthracene-1,4-dione, or a combination thereof.

For example, the anthracene-1,4-dione-based diamine monomer may be 9,10-diaminoanthracene-1,4-dione, 5,9-diaminoanthracene-1,4-dione, or a combination thereof.

The anthracene-1,4-dione-based diamine monomer may not only form an amide bond but also provide an additional carbonyl group by introducing a 1,4-dione functional group (anthracene-1,4-dione) into the anthracene backbone, thereby enhancing the interaction with the electrolyte and improving the binding strength between the electrode and the binder.

Structural examples of the anthraquinone-based diamine monomer, the anthracenone-based diamine monomer, the benzophenone-based diamine monomer, and the anthracene-1,4-dione-based diamine monomer are illustrated in FIG. 1.

In one embodiment of the present application, the polyamide polymer may further include a second monomer unit containing at least one aromatic ring.

At least one aromatic ring above may be used to form part of the backbone of the polyamide polymer. In other words, the polyamide polymer may contain such an aromatic ring within the backbone.

The monomer unit containing at least one aromatic ring must be capable of generating the polyamide polymer by polymerization with the diamine monomer and may contain a substituent to this end.

In one embodiment of the present application, the polyamide polymer may further include a third monomer unit containing a sulfone, a fourth monomer unit containing a carboxylic acid, or a combination thereof.

The third monomer unit containing a sulfone may also include an aromatic ring.

In the third monomer unit containing a sulfone, the sulfone or a combination of the sulfone and the aromatic ring may be used to form part of the backbone of the polyamide polymer. In other words, the polyamide polymer may contain the sulfone or a combination of the sulfone and the aromatic ring within the backbone.

The third monomer unit containing a sulfone may contribute to enhancing the binding properties of the polyamide polymer. The third monomer unit may also significantly contribute to improving battery properties. Furthermore, the third monomer unit containing a sulfone may contribute to improving the initial efficiency of the battery.

In one embodiment of the present application, the second monomer unit containing at least one aromatic ring may be formed by polymerization of a terephthaloyl chloride (TPC) monomer, an isophthaloyl chloride monomer, a phthalic acid monomer, an isophthalic acid monomer, a terephthalic acid monomer, or a combination thereof.

In one embodiment of the present application, based on 100 mol% of the total content of the TPC and the isophthaloyl chloride used in the polymerization of the polyamide polymer, a molar ratio of the TPC to the isophthaloyl chloride (mol% of the TPC:mol% of the isophthaloyl chloride) may be in the range of 100:0 to 0:100.

For example, the molar ratio of the TPC to the isophthaloyl chloride (mol% of the TPC:mol% of the isophthaloyl chloride) may be in the range of 90:10 to 10:90, 80:20 to 20:80, 75:25 to 25:75, 70:30 to 30:70, 50:50 to 90:10, 50:50 to 80:20, 50:50 to 70:30, 60:40 to 75:25, 60:40 to 70:30, or 70:30.

In other words, TPC and isophthaloyl chloride may be used in combination for the polymerization of the polyamide polymer of the present application.

In one embodiment of the present application, the third monomer unit containing a sulfone may be formed by polymerization of bis[4-(4-aminophenoxy)phenyl]sulfone (BAPS), bis(4-aminophenyl)sulfone, bis(3-aminophenyl)sulfone, 3,3'-diaminodiphenylsulfone, 3,4'-diaminodiphenylsulfone, 4,4'-diaminodiphenylsulfone, 1,3-bis(3-aminophenylsulfone)benzene, 1,3-bis(3-aminophenylsulfone), 1,3-bis(4-aminophenylsulfone)benzene, 1,3-bis(4-aminophenylsulfone), 1,4-bis(4-aminophenylsulfone)benzene, 1,4-bis(4-aminophenylsulfone), bis[3-(3-aminophenoxy)phenyl]sulfone, bis[3-(4-aminophenoxy)phenyl]sulfone, bis[4-(3-aminophenoxy)phenyl]sulfone, or a combination thereof.

In particular, the use of BAPS may significantly improve the binding properties of the polyamide polymer.

Additionally, in a battery using a positive electrode to which BAPS is applied, battery properties, such as initial efficiency, may be significantly improved.

The fourth monomer unit containing a carboxylic acid may contain one or more carboxylic acids, and this carboxylic acid may serve as a substituent of an aromatic ring.

Using an appropriate amount of the fourth monomer unit containing a carboxylic acid may lead to improved binding strength of the polyamide polymer and enhanced battery performance.

In one embodiment of the present application, the fourth monomer unit containing a carboxylic acid may be formed by polymerization of 5,5'-methylenebis(2-aminobenzoic acid) (MBAA), 3,5-diaminobenzoic acid (DABA), or a combination thereof.

The carboxylic acid of MBAA or DABA may contribute to improving the binding strength with an aluminum current collector.

In one embodiment of the present application, the polyamide polymer may be formed by polymerization of DBP, BAPS, MBAA, and TPC.

In one embodiment of the present application, the polyamide polymer may be formed by polymerization of DAAQ, BAPS, MBAA, and TPC.

In one embodiment of the present application, in the polyamide polymer,

based on 100 mol% of the total content of the first, third, and fourth monomer units,

the first monomer unit may be present in an amount in the range of 1 to 100 mol%.

For example, the first monomer unit may be present in an amount in the range of 1 to 5 mol%, 5 to 10 mol%, 10 to 20 mol%, 20 to 25 mol%, 25 to 30 mol%, 20 to 30 mol%, 30 to 40 mol%, 40 to 50 mol%, 50 to 60 mol%, 45 to 55 mol%, 60 to 70 mol%, 70 to 75 mol%, 75 to 80 mol%, 70 to 80 mol%, 80 to 90 mol%, 90 to 100 mol%, 5 to 25 mol%, 25 to 50 mol%, 50 to 75 mol%, or 75 to 100 mol%.

When the content of the first monomer unit falls below the aforementioned range, the structural strength of the polyamide polymer may be reduced. In particular, the binding strength with an electrode active material may decrease, thereby increasing the likelihood of detachment of the electrode active material during charge and discharge processes. Furthermore, the durability of the polyamide polymer deteriorates, which may adversely affect long-term battery life.

In one embodiment of the present application, in the polyamide polymer,

based on 100 mol% of the total content of the first, third, and fourth monomer units,

a content ratio of the first, third, and fourth monomer units (content of the first monomer unit:content of the third monomer unit:content of the fourth monomer unit) may be in the range of 1 to 80 mol%: 10 to 98 mol%:1 to 10 mol%.

For example, the content ratio of the first, third, and fourth monomer units (content of the first monomer unit:content of the third monomer unit:content of the fourth monomer unit) may be in the range of 2 to 6 mol%:88 to 95 mol%:2 to 6 mol%, 22 to 28 mol%:67 to 73 mol%:2 to 6 mol%, 47 to 53 mol%:42 to 48 mol%:2 to 6 mol%, or 72 to 78 mol%: 17 to 23 mol%:2 to 6 mol%.

When the content of the third monomer unit exceeds the aforementioned range, the mechanical rigidity of the polyamide polymer may increase. Accordingly, the flexibility of the binder is likely to decrease. Additionally, an excessive amount of the sulfone group may disrupt the existing hydrogen-bonding network within the polyamide polymer, thereby potentially compromising structural balance. Furthermore, the crystallinity of the polyamide polymer may increase, which is likely to reduce adhesive strength to the electrode active material.

When the content of the third monomer unit falls below the aforementioned range, the electrolyte affinity of the polyamide polymer may decrease. Accordingly, the permeability of the electrolyte is likely to decrease. Additionally, when the content of the sulfone group is insufficient, the flexibility of the polyamide polymer may decrease. Furthermore, the mechanical stability of the binder may decrease, which is likely to weaken the binding strength with the electrode active material during charge and discharge processes.

When the content of the fourth monomer unit exceeds the aforementioned range, the acidity of the polyamide polymer may increase. Accordingly, the corrosion reaction with the metal current collector is likely to be facilitated. Additionally, an excessive amount of the carboxylic acid may reduce the chemical stability of the polyamide polymer, and thus is likely to adversely affect long-term battery performance. Furthermore, structural imbalance in the polyamide polymer may occur, thereby potentially reducing interaction with the electrolyte.

When the content of the fourth monomer unit falls below the aforementioned range, the binding strength with the electrode active material of the polyamide polymer may decrease. Accordingly, the adhesive strength to the electrode active material may decrease, thereby potentially reducing the stability of the electrode during charge and discharge processes. Additionally, when the amount of carboxylic acid is insufficient, the bonding strength of the polyamide polymer with the metal current collector may decrease, which is likely to deteriorate the durability of the electrode. Furthermore, the interfacial properties of the polyamide polymer may deteriorate, thereby potentially resulting in non-uniform contact with the electrolyte.

In one embodiment of the present application, the polyamide polymer may include a monomer repeating unit represented by Formula 1 below.

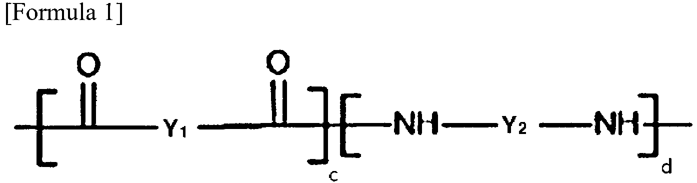

In Formula 1,
Y₁ may include at least one aromatic ring substituted with a halogen element, hydrogen, a hydroxyl group, a carboxyl group, a straight-chain or branched-chain hydrocarbon group having 1 to 4 carbon atoms, or a combination thereof,
Y₂ may include: an aromatic ring having at least one carbonyl group on a backbone or side chain thereof;
two aromatic rings linked to each other by -SO₂-;
an aromatic ring substituted with at least one carboxyl group;
or a combination thereof,
wherein the two aromatic rings linked to each other by -SO₂- may be substituted with a halogen element, hydrogen, a hydroxyl group, a carboxyl group, a straight-chain or branched-chain hydrocarbon group having 1 to 4 carbon atoms, the hydrocarbon group being substituted or unsubstituted with a halogen element, or a combination thereof, and
c + d = 1 (wherein Y₂ necessarily includes the aromatic ring having at least one carbonyl group on the backbone or side chain thereof).

In Formula 1, c and d represent mole fractions.

In Formula 1, c may be in the range of 0.4 to 0.6, and d may be in the range of 0.4 to 0.6.

In Formula 1, the halogen element may not include fluorine.

In Formula 1, the monomer unit corresponding to Y₁ is a monomer unit containing at least one aromatic ring.

For example, a monomer that is polymerized to form the monomer unit corresponding to Y₁ in Formula 1 may be a TPC monomer, an isophthaloyl chloride monomer, a phthalic acid monomer, an isophthalic acid monomer, a terephthalic acid monomer, or a combination thereof.

In addition, a monomer that is polymerized to form the monomer unit corresponding to Y₂ in Formula 1 may be a diamine monomer containing both a sulfone and at least one aromatic ring, a diamine monomer containing a carboxylic acid, a diamine monomer containing at least one carbonyl group and two or more aromatic rings, or a combination thereof.

The diamine monomer that contains both a sulfone and at least one aromatic ring, and is polymerized to form the monomer unit corresponding to Y₂ in Formula 1 may, for example, be BAPS, bis(4-aminophenyl)sulfone, bis(3-aminophenyl)sulfone, 3,3'-diaminodiphenylsulfone, 3,4'-diaminodiphenylsulfone, 4,4'-diaminodiphenylsulfone, 1,3-bis(3-aminophenylsulfone)benzene, 1,3-bis(3-aminophenylsulfone), 1,3-bis(4-aminophenylsulfone)benzene, 1,3-bis(4-aminophenylsulfone), 1,4-bis(4-aminophenylsulfone)benzene, 1,4-bis(4-aminophenylsulfone), bis[3-(3-aminophenoxy)phenyl]sulfone, bis[3-(4-aminophenoxy)phenyl]sulfone, bis[4-(3-aminophenoxy)phenyl]sulfone, or a combination thereof.

Additionally, the diamine monomer that contains a carboxylic acid and is polymerized to form the monomer unit corresponding to Y₂ in Formula 1 may, for example, be MBAA, DABA, or a combination thereof.

Furthermore, the diamine monomer that contains at least one carbonyl group and two or more aromatic rings, and is polymerized to form the monomer unit corresponding to Y₂ in Formula 1 may, for example, be 2,7-diaminoanthraquinone, 2,6-diaminoanthraquinone, DAAQ, 1,5-diaminoanthraquinone, 3,6-diamino-9(10H)-anthracen-9-one, 2,6-diamino-9(10H)-anthracen-9-one, 1,4-diamino-9(10H)-anthracen-9-one, 1,5-diamino-9(10H)-anthracen-9-one, 2,7-diamino-9(10H)-anthracen-9-one, DBP, 3,3'-diaminobenzophenone, 4-amino-[(3-aminophenyl)benzophenone], 5,8-diaminoanthracene-1,4-dione, 9,10-diaminoanthracene-1,4-dione, 5,9-diaminoanthracene-1,4-dione, or a combination thereof.

In one embodiment of the present application, the polyamide polymer may have a weight average molecular weight of 50,000 or more and 1,000,000 or less.

Within the aforementioned range of the weight average molecular weight of the polyamide polymer of the present application, the greater the weight average molecular weight, the greater the binding strength of the polyamide polymer.

When the weight average molecular weight of the polyamide polymer is less than 50,000, the electrolyte stability of the electrode binder including the polyamide polymer may decrease. Additionally, the stability of an electrode slurry including such a binder including the polyamide polymer may decrease.

In the meantime, when the weight average molecular weight of the polyamide polymer exceeds 1,000,000, the viscosity of the slurry may increase during preparation, making slurry coating challenging.

A binder according to another aspect of the present application may include the polyamide polymer.

A slurry according to a further aspect of the present application may include the binder and an electrode active material.

In one embodiment of the present application, the slurry may include a solvent, and examples of the solvent may include water or an organic solvent such as carboxymethyl cellulose (CMC), N-methyl pyrrolidone (NMP), dimethylformamide (DMF), acetone, and dimethylacetamide. Preferably, CMC is used. Additionally, the slurry may include one or more solvents.

This CMC may have a degree of substitution of hydroxy groups (-OH) with carboxymethyl groups (-CH₂CO₂H) in the range of 0.7 to 1.2, a molecular weight (Mn) in the range of 500,000 to 900,000, and a pH in the range of 6.5 to 8.0.

Additionally, the slurry may include CMC and an electrode active material capable of lithium-ion intercalation and deintercalation.

For example, the slurry may be a positive electrode slurry, a negative electrode slurry, or a combination thereof.

As for the electrode active material used for electrode formation in the present disclosure, any electrode active material available in the art can be employed.

In one embodiment of the present application, the electrode active material, which is capable of causing an electrochemical reaction, is used in the preparation of the negative and positive electrode slurries. Depending on the electrode type, a negative electrode active material and a positive electrode active material may be provided.

The negative electrode active material may be one or more selected from the group consisting of carbon and graphite materials capable of lithium-ion intercalation and deintercalation, Si-based materials, metals and compounds capable of alloying with lithium, composites of metals and compounds thereof with carbon and graphite materials, nitrides containing lithium, and the like.

Examples of the carbon and graphite materials include natural graphite, synthetic graphite, expanded graphite, carbon fibers, non-graphitizable carbon, carbon black, carbon nanotubes, fullerene, activated carbon, hard carbon, and soft carbon. Examples of the Si-based materials include Si, SiOₓ (where 0 < x < 2), Si-Y alloys (where Y is an alkali metal, alkaline earth metal, a Group 13 element, a Group 14 element, a transition metal, a rare-earth element, or a combination thereof), Si-C composites, or Si-based compounds of combinations thereof. Examples of the metals and elements capable of alloying with lithium include Al, Si, Sn, Ag, Bi, Mg, Zn, In, Ge, Pb, Pd, Pt, and Ti. The negative electrode slurry, with respect to 100 parts by weight thereof, may include 20 to 80 parts by weight of the negative electrode active material.

Specific examples of the positive electrode active material may include: lithium metal; a lithium cobalt-based oxide, such as LiCoO₂; a lithium manganese-based oxide, such as Li₁₊ₓMn₂₋ₓO₄ (where x is in the range of 0 to 0.33), LiMnO₃, LiMn₂O₃, and LiMnO₂; a lithium copper oxide, such as Li₂CuO₂; a vanadium oxide, such as LiV₃O₈, V₂O₅, and Cu₂V₂O₇; a lithium nickel-based oxide represented by LiNi₁₋ₓMₓO₂ (where M is Co, Mn, Al, Cu, Fe, Mg, B, or Ga, and x is in the range of 0.01 to 0.3); a lithium manganese composite oxide represented by LiMn₂₋ₓMₓO₂ (where M is Co, Ni, Fe, Cr, Zn, or Ta, and x is in the range of 0.01 to 0.1) or Li₂Mn₃MO₈ (where M is Fe, Co, Ni, Cu, or Zn); a lithium-nickel-manganese-cobalt-based oxide represented by Li(NiₐCo_{b}Mn_{c})O₂ (where 0 < a < 1, 0 < b < 1, 0 < c < 1, and a + b + c = 1); sulfur or a disulfide compound; a phosphate, such as LiFePO₄, LiMnPO₄, LiCoPO₄, and LiNiPO₄; and Fe₂(MoO₄)₃, but are not limited thereto.

As for the binder of a secondary battery, in addition to the binder including the polyamide polymer including the monomer unit containing an aromatic ring of the present application, any one of poly(meth)acrylic acid, poly(meth)acrylamide, CMC, PVDF, poly(vinylidene fluoride-co-hexafluoropropylene) (P(VdF/HFP)), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, acrylonitrile-butadiene rubber, and copolymers thereof, or two or more of the foregoing may be selected for use in combination.

The binder content within a slurry composition is preferably 0.3 wt% or more and 10 wt% or less based on the solid content, which is more preferably 0.7 wt% or more and 8 wt% or less. When the binder content is less than 0.3 wt%, achieving sufficient binding strength within a current collector and an electrode composition may be highly unlikely. On the other hand, when the binder content exceeds 10 wt%, the proportion of the binder within the electrode slurry composition increases, resulting in reduced battery capacity.

An electrode according to yet another aspect of the present application may include a current collector and an electrode active material layer formed on the current collector, the electrode active material layer including the binder of the present application.

For example, the electrode may be a positive electrode, a negative electrode, or a combination thereof.

In one embodiment of the present application, the current collector is a portion where electron movement occurs during an electrochemical reaction of the active material. Depending on the electrode type, a negative electrode current collector and a positive electrode current collector may be provided. The current collector can enhance the bonding strength of the electrode active material by forming fine protrusions and depressions on the surface thereof, and may be used in various forms, including films, sheets, foils, nets, porous materials, foams, and non-woven fabrics.

Typically, the negative electrode current collector may be formed to a thickness in the range of 5 to 30 µm. Such a negative electrode current collector is not particularly limited as long as it is conductive without causing chemical changes in batteries in the art. Examples of the negative electrode current collector used may include a copper foil, a nickel foil, a stainless steel foil, a titanium foil, a nickel foam, a copper foam, a polymer substrate coated with a conductive metal, or a combination thereof.

Typically, the positive electrode current collector may be formed to a thickness in the range of 3 to 500 µm. The positive electrode current collector is not particularly limited as long as it is highly conductive without causing chemical changes in batteries in the art. Examples of the positive electrode current collector used may include copper, stainless steel, aluminum, nickel, titanium, calcined carbon, copper or stainless steel, the surface of which is treated with carbon, nickel, titanium, silver, and the like, and aluminum-cadmium alloy.

The electrode may be manufactured through the following steps: (a) preparing a composition for forming the electrode active material layer, the composition including the electrode active material and the binder of the present application; and (b) applying the composition for forming the electrode active material layer on the current collector, followed by drying.

The composition for forming the electrode active material layer may be mixed by common stirring methods, for example, using common mixers such as a highspeed shear mixer and a homomixer.

Step (b) is to manufacture the electrode for a lithium secondary battery by applying the composition for forming the electrode active material layer, prepared in Step (a), on the current collector, followed by drying.

In this case, there are no limitations in the methods of applying the slurry-form composition for forming the electrode active material layer. For example, methods such as doctor blade coating, dip coating, gravure coating, slit die coating, spin coating, comma coating, bar coating, reverse roll coating, screen coating, and cap coating may be performed to manufacture the electrode.

The resulting product obtained through the application may then be dried to finally manufacture the electrode for a secondary battery (especially a lithium secondary battery) in which the electrode active material layer is formed.

As the current collector, any material that is conductive and does not chemically react with the slurry for forming the electrode may be used. Representative examples thereof include an aluminum foil and a copper foil. In addition, a current collector having a thickness in the range of 3 to 50 µm may be selected for use.

In this case, the electrode active material layer may further include a dispersant, a conductive additive, a filler, and other additives, in addition to the electrode active material.

The electrode active material may be included in an amount in the range of 90 to 99 wt% based on the solid content. When the content of the active material is low, the battery may fail to exhibit high capacity. On the other hand, when the content of the active material is excessively high, the adhesive strength, conductivity, and the like of the electrode may be reduced because the contents of the binder, the conductive additive, and the like decrease relatively.

The conductive additive is not particularly limited, and may be appropriately selected depending on the types of battery and capacitor. For example, carbon materials such as graphite and activated carbon may be used in lithium-ion secondary batteries. Additionally, in the case of nickel-hydrogen secondary batteries, cobalt oxide may be used, and nickel powder, cobalt oxide, titanium oxide, carbon materials, and the like may be used for the negative electrode.

Examples of the carbon materials may include acetylene black, furnace black, graphite, carbon fibers, fullerenes, and carbon nanotubes (CNTs).

The amount of the conductive additive used, based on 100 parts by weight of the electrode active material, is typically in the range of 1 to 20 parts by weight and preferably in the range of 2 to 10 parts by weight.

With decreasing content of the conductive additive and increasing content of the electrode active material, a secondary battery may exhibit improved energy density. Therefore, it is important to exhibit high efficiency even when using the same amount of the conductive additive.

The smaller and more evenly dispersed the conductive additive used in the slurry for a secondary battery, the higher the conductive efficiency, which may lead to lower internal resistance, better output characteristics, and better life characteristics of the battery. On the other hand, the larger and more unevenly dispersed the conductive additive, the poorer the binding properties and the lower the conductivity, even when using the same amount, which may adversely affect the life characteristics and output characteristics of the battery. In addition, when the dispersion has low viscosity, the solid content of the slurry may be increased to accelerate electrode production.

A separator according to yet another aspect of the present application may include a porous substrate coated with a slurry composition including the binder of the present application.

The separator must be an insulator so that the negative and positive electrodes are separable, and is required to provide a passage through which only lithium ions can migrate. To this end, the wettability with the electrolyte needs to be good, and porous non-woven fabrics and porous polymer films such as polyethylene (PE)/polypropylene (PP) are used. In addition, a coated separator, for example, a ceramic-coated separator with enhanced thermal resistance and mechanical strength, may be used to prevent a short circuit of the battery, and such a coating may be applied in either a single-layer or multilayer form.

While the separator may be made of a porous substrate, any porous substrate commonly used in electrochemical devices is usable as the porous substrate. For example, a polyolefin-based porous film or non-woven fabric may be used, but the separator is not particularly limited thereto.

The separator may be a porous substrate made of any one or a mixture of two or more selected from the group consisting of PE, PP, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate.

The slurry composition may include inorganic particles. As for the inorganic particles, any insulating particles may be used without limitation. Preferably, the inorganic particles may be high-dielectric-constant insulating particles.

Specific examples of the inorganic particles include Al₂O₃, AlOOH, SiO₂, TiO₂, ZrO₂, ZnO, NiO, CaO, SnO₂, Y₂O₃, MgO, BaTiO₃, CaTiO₃, SrTiO₃, SiC, Li₃PO₄, Pb(Zr,Ti)O₃(PZT), (Pb,La)(Zr,Ti)O₃(PLZT), and mixtures thereof.

The inorganic particles are not particularly limited in size, but may have, for example, an average particle diameter in the range of 0.01 to 30 µm, which is more preferably in the range of 0.1 to 10 µm. When the average particle diameter of the inorganic particles is less than the aforementioned preferable range, dispersibility may decrease. On the other hand, when the average particle diameter exceeds the aforementioned preferable range, the thickness of the coating layer may become large after coating, leading to deterioration in mechanical properties.

In addition, the inorganic particles are not particularly limited in form but may, for example, have a spherical, platy, elliptical, or irregular form.

The separator may be manufactured by coating at least one surface of a porous substrate film with the slurry composition or by forming the slurry composition into a film and laminating such a formed film to the porous substrate film.

In the meantime, the separator may be used as a separator for a secondary battery and, for example, may be used as a separator for a lithium secondary battery.

One example of manufacturing the separator may include: Step (a) of preparing a polymer solution by dissolving or dispersing the binder in a solvent; Step (b) of adding inorganic particles to the polymer solution prepared in Step (a), followed by mixing; and Step (c) of coating one or more regions selected from the group consisting of the surface of a polyolefin-based separator substrate and some pores of the substrate with the resulting mixture obtained in Step (b), followed by drying.

First, 1) a polymer solution having a form in which the binder is dissolved or dispersed in an appropriate solvent is prepared.

As the solvent, those having a solubility index similar to that of the copolymer used as the binder and having a low boiling point are preferably used. This is to facilitate uniform mixing and the removal of the solvent thereafter. Non-limiting examples of the solvents usable may include acetone, tetrahydrofuran, methylene chloride, chloroform, DMF, NMP, cyclohexane, water, or a mixture thereof. More preferably, the solvent is used in a water-dispersed state.

2) The inorganic particles are added to the prepared polymer solution and dispersed to prepare the mixture of the inorganic particles and the polymer.

Preferably, a process of dispersing the polymer solution and the inorganic particles is performed. In this case, the dispersion time may be appropriately in the range of 1 to 50 hours. Typical methods may be used as the dispersion method, and a ball milling method is particularly preferable.

The mixture composed of the inorganic particles and the polymer is not particularly limited in composition. However, depending on the composition of the mixture, the thickness, pore size, and porosity of the finally prepared organic/inorganic composite porous separator of the present disclosure may be controlled.

In other words, the higher the ratio (I/P) of the inorganic particles (I) with respect to the polymer (P), the higher the porosity of the separator, which results in an increase in the thickness of the separator at the same solid content (total weight of the inorganic particles and the polymer). In addition, pores are more likely to be formed between the inorganic particles, so the pore size becomes larger. In this case, the larger the size (particle diameter) of the inorganic particles, the greater the interstitial distance therebetween, thereby increasing the pore size.

3) The upper portion of the prepared polyolefin-based separator substrate may be coated with the prepared mixture of the inorganic particles and the polymer, followed by drying, to obtain the separator of the present disclosure.

In this case, as a method of coating the upper portion of the polyolefin-based separator substrate with the mixture of the inorganic particles and the polymer, coating methods commonly known in the art may be used. For example, various methods such as dip coating, die coating, roll coating, comma coating, or combinations thereof may be used. In addition, when coating the upper portion of the polyolefin-based separator substrate with the mixture of the inorganic particles and the polymer, the coating may be performed on both surfaces of the separator substrate or may be selectively performed on only one surface.

A secondary battery according to yet another aspect of the present application may include the binder of the present application.

For example, the secondary battery may include a positive electrode including the binder of the present application, a negative electrode, a separator, or a combination thereof.

The secondary battery may include a positive electrode, a negative electrode, the above separator interposed between the positive and negative electrodes, and an electrolyte.

The secondary battery may be manufactured by methods commonly known in the art. As one embodiment thereof, the secondary battery may be manufactured by interposing the separator between the electrodes to obtain an assembly and then injecting the electrolyte into the assembly.

In the meantime, the electrolyte of the lithium secondary battery, which is a lithium salt-containing non-aqueous electrolyte, is composed of a solvent and a lithium salt. As the solvent, non-aqueous organic solvents, organic solid electrolytes, inorganic solid electrolytes, and the like are used.

The lithium salt is a material that easily dissolves in the non-aqueous electrolyte, and examples thereof used may include LiCl, LiBr, LiI, LiClO₄, LiBF₄, LiB₁₀Cl₁₀, LiPF₆, LiAsF₆, LiSbF₆, LiAlCl₄, LiSCN, LiC₄BO₈, LiCF₃CO₂, LiCH₃SO₃, LiCF₃SO₃, LiN(SO₂CF₃)₂, LiN(SO₂F)₂, LiN(SO₂C₂F₅)₂, LiC₄F₉SO₃, LiC(CF₃SO₂)₃, (CF₃SO₂)·2NLi, lithium chloroborane, lithium lower aliphatic carboxylate, and lithium 4-phenyl borate imide.

Examples of the non-aqueous organic solvents used may include aprotic organic solvents such as NMP, propylene carbonate, ethylene carbonate, butylene carbonate, dimethyl carbonate, diethyl carbonate, ethyl methyl carbonate, γ-butyrolactone, 1,2-dimethoxy ethane, 1,2-diethoxy ethane, tetrahydroxy franc, 2-methyl tetrahydrofuran, dimethyl sulfoxide, 1,3-dioxolane, 4-methyl-1,3-dioxene, diethyl ether, formamide, DMF, dioxolane, acetonitrile, nitromethane, methyl formate, methyl acetate, phosphoric acid triester, trimethoxy methane, dioxolane derivatives, sulfolane, methylsulfolane, 1,3-dimethyl-2-imidazolidinone, propylene carbonate derivatives, tetrahydrofuran derivatives, ether, methyl propionate, and ethyl propionate.

Examples of the organic solid electrolytes used may include PE derivatives, polyethylene oxide derivatives, polypropylene oxide derivatives, phosphoric acid ester polymers, poly agitation lysine, polyester sulfide, polyvinyl alcohol, PVDF, polymers containing secondary dissociation groups, and the like.

Examples of the inorganic solid electrolytes used may include nitrides, halides, sulfates, and the like of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

In addition, the non-aqueous electrolyte may further include other additives for the purposes of improving the charge and discharge characteristics, flame retardancy, and the like. Examples of such additives may include pyridine, triethyl phosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propane sultone (PRS), and vinylene carbonate (VC).

The lithium secondary battery according to the present disclosure may be subjected to folding and lamination stacking processes of the separator and the electrodes, in addition to a typical winding process. Furthermore, a case of the battery may be cylindrical, prismatic, pouch-type, coin-type, or the like.

In one embodiment of the present application, the binding strength of the positive electrode manufactured using the binder of the present application may be 250 gf/25 mm or more.

For example, the binding strength may be 250 gf/25 mm or more, 253 gf/25 mm or more, 266 gf/25 mm or more, 289 gf/25 mm or more, 310 gf/25 mm or more, 315 gf/25 mm or more, or 330 gf/25 mm or more.

In the meantime, the binding strength of the positive electrode manufactured using the binder of the present application may be 400 gf/25 mm or less, or 350 gf/25 mm or less.

In one embodiment of the present application, the initial discharge capacity of the secondary battery (cell) including the binder of the present application may be 198 mAh/g or more.

For example, the initial discharge capacity may be 198 mAh/g or more, or 199 mAh/g or more.

In the meantime, the initial discharge capacity of the secondary battery (cell) including the binder of the present application may be 240 mAh/g or less, 230 mAh/g or less, 220 mAh/g or less, or 210 mAh/g or less.

In this case, to measure the initial discharge capacity, initial formation may be set by charging to 4.2 V at a 0.1 C rate in CC/CV mode and discharging to 2.8 V at a 0.1 C rate, followed by charging to 4.2 V at a 0.2 C rate and discharging to 2.8 V at a 0.2 C rate, and then charging to 4.2 V at a 0.5 C rate and discharging to 2.8 V at a 0.5 C rate. The chamber temperature may be set to 25°C.

During the initial formation, the discharge capacity during discharging to 2.8 V at a 0.1 C rate may be measured as the initial discharge capacity.

In one embodiment of the present application, the initial efficiency of the secondary battery (cell) including the binder of the present application may be 87.5% or more.

For example, the initial efficiency may be 87.5% or more, 87.6% or more, 87.7% or more, or 87.8% or more.

In the meantime, the initial efficiency of the secondary battery (cell) including the binder of the present application may be 95% or less, or 90% or less.

In this case, the initial efficiency may be calculated using Equation 1 below. [Equation 1] 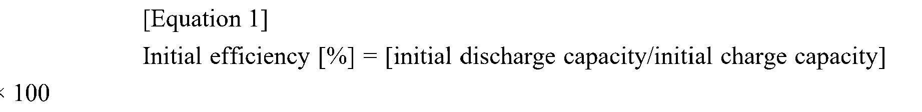 Initial efficiency [%] = [initial discharge capacity/initial charge capacity] × 100

In one embodiment of the present application, the capacity retention rate (cycle stability), calculated by measuring the capacity of the battery upon completion of 100 cycles relative to the initial capacity (capacity in the first cycle) of the secondary battery (cell) including the binder of the present application, may be 97% or more.

For example, the capacity retention rate may be 97% or more, 97.1% or more, 97.2% or more, 97.3% or more, 97.4% or more, 97.5% or more, 97.6% or more, 97.7% or more, or 97.8% or more.

In the meantime, the capacity retention rate of the secondary battery (cell) including the binder of the present application may be 100% or less, 99% or less, or 98% or less.

To measure the capacity retention rate, the battery may be charged to 4.2 V at a 1 C rate in CC/CV mode and then discharged to 2.8 V at a 1 C rate. In this case, the chamber temperature may be set to 25°C.

The above "C", which refers to a cell discharge rate, is a value obtained by dividing the total capacity of the cell by the total discharge time.

Under the conditions set as described above, the battery may be charged and discharged to perform cycle analysis. In this case, one cycle may consist of one charge and one discharge.

Upon completion of 100 cycles, the capacity retention rate of the battery may be calculated using Equation 2 below. [Equatioin 2] 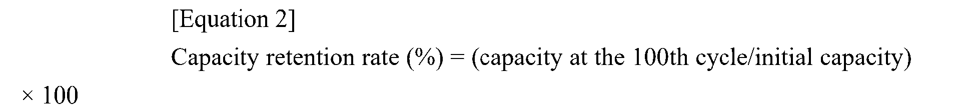 Capacity retention rate (%) = (capacity at the 100th cycle/initial capacity) × 100

Hereinafter, the present application will be described in more detail using examples, but the present application is not limited thereto.

### Preparation Example 1. Preparation of Binder Polymer

### [Example 1]

In a 500 mL four-necked flask under a nitrogen atmosphere, NMP, DBP, BAPS, and MBAA, which is a monomer containing a carboxylic acid, were added and stirred.

The molar ratio of MBAA was fixed at 5% based on the total amine monomers, and the molar ratio of DBP to BAPS was set to 5:90 within the remaining 95%.

After reducing the temperature inside the reactor to 5°C or less, TPC, which is a monomer to form a monomer unit containing an aromatic ring, was added and stirred for a sufficient time.

An olefin-based neutralizing agent was added to the solution, the viscosity of which increased by a certain degree, and then stirred, thereby removing HCl generated during the synthesis process.

Finally, a polyamide copolymer solution for a binder, in which the solid content concentration was 10 wt%, was prepared.

### [Example 2]

A polyamide binder was prepared in the same manner as in Example 1, except that the molar ratio of DBP to BAPS was set to 25:70.

### [Example 3]

A polyamide binder was prepared in the same manner as in Example 1, except that the molar ratio of DBP to BAPS was set to 50:45.

### [Example 4]

A polyamide binder was prepared in the same manner as in Example 1, except that the molar ratio of DBP to BAPS was set to 75:20.

### [Example 5]

In a 500 mL four-necked flask under a nitrogen atmosphere, NMP, DAAQ, BAPS, and MBAA, which is a monomer containing a carboxylic acid, were added and stirred.

The molar ratio of MBAA was fixed at 5% based on the total amine monomers, and the molar ratio of DAAQ to BAPS was set to 5:90 within the remaining 95%.

After reducing the temperature inside the reactor to 5°C or less, TPC, which is a monomer to form a monomer unit containing an aromatic ring, was added and stirred for a sufficient time.

An olefin-based neutralizing agent was added to the solution, the viscosity of which increased by a certain degree, and then stirred, thereby removing HCl generated during the synthesis process.

Finally, a polyamide copolymer solution for a binder, in which the solid content concentration was 10 wt%, was prepared.

### [Example 6]

A polyamide binder was prepared in the same manner as in Example 5, except that the molar ratio of DAAQ to BAPS was set to 25:70.

### [Example 7]

A polyamide binder was prepared in the same manner as in Example 5, except that the molar ratio of DAAQ to BAPS was set to 50:45.

### [Example 8]

A polyamide binder was prepared in the same manner as in Example 5, except that the molar ratio of DAAQ to BAPS was set to 75:20.

### [Comparative Example 1]

In a 500 mL four-necked flask under a nitrogen atmosphere, NMP, 4,4'-oxydianiline (ODA), BAPS, and MBAA, which is a monomer containing a carboxylic acid, were added and stirred.

The molar ratio of MBAA was fixed at 5% based on the total amine monomers, and the molar ratio of ODA to BAPS was set to 85:10 within the remaining 95%.

After reducing the temperature inside the reactor to 5°C or less, TPC, which is a monomer to form a monomer unit containing an aromatic ring, was added and stirred for a sufficient time.

An olefin-based neutralizing agent was added to the solution, the viscosity of which increased by a certain degree, and then stirred, thereby removing HCl generated during the synthesis process.

Finally, a polyamide copolymer solution for a binder, in which the solid content concentration was 10 wt%, was prepared.

The composition ratios of the added diamine monomers in Examples 1 to 8 and Comparative Example 1 (relative molar ratios of the respective monomers added) are shown in Table 1 below.

In Table 1 below, DBP, DAAQ, ODA, BAPS, and MBAA refer to 4,4'-diaminobenzophenone, 1,4-diaminoanthraquinone, 4,4'-oxydianiline, bis[4-(4-aminophenoxy)phenyl]sulfone, and 5,5'-methylenebis(2-aminobenzoic acid), respectively.

**[Table 1]**

| Copolymer types | Composition ratio of diamine monomers (molar ratio) |
|---|---|
| Example 1 | MBAA:DBP:BAPS (5:5:90) |
| Example 2 | MBAA:DBP:BAPS (5:25:70) |
| Example 3 | MBAA:DBP:BAPS (5:50:45) |
| Example 4 | MBAA:DBP:BAPS (5:75:20) |
| Example 5 | MBAA:DAAQ:BAPS (5:5:90) |
| Example 6 | MBAA:DAAQ:BAPS (5:25:70) |
| Example 7 | MBAA:DAAQ:BAPS (5:50:45) |
| Example 8 | MBAA:DAAQ:BAPS (5:75:20) |
| Comparative Example 1 | MBAA:ODA:BAPS (5:85:10) |

### Preparation Example 2. Preparation of Positive Electrode Slurry and Positive Electrode

A positive electrode active material slurry composition having a solid content of 65 wt% was prepared by mixing 97.5 wt% of NCM811 serving as an electrode active material, 1.5 wt% of the binder polymer prepared in each of Examples 1 to 8 and Comparative Example 1, 1 wt% of a CNT dispersion, and the remainder of NMP.

In the meantime, the positive electrode active material slurry composition may include 96 wt% or more and 98 wt% or less of the electrode active material, 1.5 wt% or more and 2 wt% or less of the binder polymer, and 0.7 wt% or more and 0.8 wt% or less of the CNT dispersion. In addition, the solid content of the positive electrode active material slurry composition may be 60 wt% or more and 70 wt% or less.

An aluminum (Al) foil serving as a positive electrode current collector and having a thickness of 20 µm was coated with the prepared positive electrode active material slurry composition using an applicator, dried in a convection oven at 110°C for 1 hour, and then roll-pressed to manufacture a positive electrode.

### Preparation Example 3. Manufacture of Cell

A non-aqueous electrolyte containing 1 wt% of 1 M LiPF₆ and FEC, 1 wt% of propylene sulfite (PS), and 1 wt% of LiPO₂F₂ was used as an electrolyte. A polyolefin-based separator was interposed between the positive electrode, which used the resulting positive electrode plate manufactured using the binder polymer prepared in each of Examples 1 to 8 and Comparative Example 1 according to Preparation Example 2, and a negative electrode. Subsequently, a lithium secondary battery was manufactured in the form of a 2032 coin cell.

### Evaluation Example 1. Measurement of Binding Strength

Each positive electrode manufactured according to Preparation Example 2 was dried at 110°C for 1 hour and then cut to a size of 15 cm × 2.5 cm.

Thereafter, the coated surface of the positive electrode was adhered to an acrylic plate to which a double-sided tape was attached, and then pressed 3 to 4 times using a rubber roller to prepare a sample for a peel-off test.

The prepared sample was loaded onto a universal testing machine (UTM) capable of measuring adhesive strength, and a 180° peel test was conducted at a width of 2.5 cm. The loading value (gf/25 mm) was measured to calculate the binding strength of the positive electrode.

The calculated binding strength of the positive electrodes is shown in Table 2 below.

**[Table 2]**

| Binder polymer | Binding strength (gf/25 mm) |
|---|---|
| Example 1 | 253.11 |
| Example 2 | 289.55 |
| Example 3 | 310.15 |
| Example 4 | 266.54 |
| Example 5 | 289.45 |
| Example 6 | 330.56 |
| Example 7 | 315.66 |
| Example 8 | 250.44 |
| Comparative Example 1 | 201.52 |

As shown in Table 2, the binder polymers of Examples 1 to 8 exhibited a binding strength of 250.44 gf/25 mm or more.

It was confirmed that the binder polymers of Examples 1 to 8, in which a diamine monomer containing at least one carbonyl group in the backbone or side chain thereof was used, exhibited significantly improved binding strength compared to the polyamide binder polymer of Comparative Example 1.

The carbonyl groups contained in DBP and DAAQ can form coordination bonds with metal ions, which may act as a factor increasing the chemical bonding strength between the binder and the electrode. In addition, the carbonyl groups may act as hydrogen bond acceptors to enhance intermolecular interactions and improve the mechanical stability of the binder. Additionally, DAAQ may further increase the binding strength with the electrode active material through π-π interactions. On the other hand, ODA contains an ether functional group but lacks a carbonyl group, and the effect of improving the binding strength through coordination and hydrogen bonding is thus limited. As a result, compared to Comparative Example 1, in which ODA is used, the increase in binding strength observed in Examples 1 to 8, in which DBP or DAAQ is used, may be attributed to additional interactions such as hydrogen bonding and coordination bonding of the ketone functional group.

On the other hand, in the binder polymers of Examples 1 to 4, the highest binding strength of 310.15 gf/25 mm was confirmed to be exhibited when the content of DBP, a diamine monomer containing at least one carbonyl group in the backbone or side chain thereof, was 50 mol% based on 100 mol% of the total diamine monomer content.

In addition, in the binder polymers of Examples 5 to 8, the highest binding strength of 330.56 gf/25 mm was confirmed to be exhibited when the content of DAAQ, a diamine monomer containing at least one carbonyl group in the backbone or side chain thereof, was 25 mol% based on 100 mol% of the total diamine monomer content.

These results confirmed that the binder of the present application, including the polyamide polymer in which the molar ratio of DBP (or DAAQ), BAPS, and MBAA is appropriately adjusted, exhibits excellent binding properties.

### Evaluation Example 2. Measurement of Battery Performance

Each cell manufactured according to Preparation Example 3 using the positive electrode plate, in which the binder polymer prepared in each of Examples 1 to 8 and Comparative Example 1 was used, was charged to 4.2 V at a 0.1 C rate in CC/CV mode and discharged to 2.8 V at a 0.1 C rate, followed by charging to 4.2 V at a 0.2 C rate and discharging to 2.8 V at a 0.2 C rate, and then charging to 4.2 V at a 0.5 C rate and discharging to 2.8 V at a 0.5 C rate (initial formation). In this case, the chamber temperature was 25°C. The above "C", which refers to a cell discharge rate, is a value obtained by dividing the total capacity of the cell by the total discharge time.

The initial discharge capacity and initial efficiency of each cell manufactured according to Preparation Example 3 using the positive electrode plate, in which the binder polymer prepared in each of Examples 1 to 8 and Comparative Example 1 was used, were measured. The results thereof are shown in Table 3 below.

During the initial formation, the discharge capacity during discharging to 2.8 V at a 0.1 C rate was measured as the initial discharge capacity, and the initial efficiency was calculated using Equation 1 below. [Equation 1] 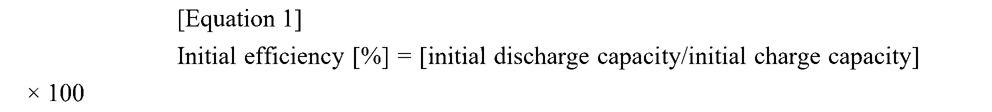 Initial efficiency [%] = [initial discharge capacity/initial charge capacity] × 100

**[Table 3]**

| Binder polymer | Initial discharge capacity (mAh/g) | Initial efficiency (%) |
|---|---|---|
| Example 1 | 198.86 | 87.7 |
| Example 2 | 199.25 | 87.8 |
| Example 3 | 199.35 | 87.8 |
| Example 4 | 198.50 | 87.5 |
| Example 5 | 199.11 | 87.7 |
| Example 6 | 199.45 | 87.7 |
| Example 7 | 199.23 | 87.8 |
| Example 8 | 199.01 | 87.6 |
| Comparative Example 1 | 198.68 | 87.6 |

As shown in Table 3, the cells manufactured according to Preparation Example 3 using the positive electrode plate, in which the binder polymer prepared in each of Examples 1 to 8 was used, exhibited an initial discharge capacity of 198.50 mAh/g or more and an initial efficiency of 87.5% or more.

The results confirmed that the cells manufactured according to Preparation Example 3 using the positive electrode plate, in which the binder polymer prepared in each of Examples 1 to 8, including a diamine monomer containing at least one carbonyl group in the backbone or side chain thereof, was used, exhibited initial discharge capacity and initial efficiency that are both equal to or improved compared to those of the cell manufactured according to Preparation Example 3 using the positive electrode plate, in which the polyamide binder polymer of Comparative Example 1 was used.

In the meantime, in the binder polymers of Examples 1 to 8, the highest initial discharge capacity of 199.45 mAh/g was confirmed to be exhibited when the content of DAAQ, a diamine monomer containing at least one carbonyl group in the backbone or side chain thereof, was 25 mol% based on 100 mol% of the total diamine monomer content.

In addition, when the electrode binder including the polyamide polymer of the present application (Examples 1 to 8) is applied, it is presumed that, compared to when the electrode binder including the polymer of Comparative Example 1 is applied, detachment of the electrode caused by lithium-ion migration can be prevented through improved binding properties, thereby enhancing the electrochemical properties of the secondary battery.

### Evaluation Example 3. Measurement of Battery Capacity Retention Rate

Charging/discharging conditions and chamber temperature conditions for analyzing the capacity retention rate (cycle stability) of each cell manufactured according to Preparation Example 3 using the positive electrode plate, in which the binder polymer prepared in each of Examples 1 to 8 and Comparative Example 1 was used, were set.

Each cell was charged to 4.2 V at a 1 C rate in CC/CV mode and then discharged to 2.8 V at a 1 C rate. In this case, the chamber temperature was 25°C. The above "C", which refers to a cell discharge rate, is a value obtained by dividing the total capacity of the cell by the total discharge time.

Under the conditions set as described above, each battery was charged and discharged to perform cycle analysis. In this case, one cycle consisted of one charge and one discharge, and a total of 100 cycles were performed. The capacity of the battery upon completion of 100 cycles was measured relative to the initial capacity (capacity at the first cycle) to evaluate how well the battery retains its capacity as cycling progressed.

The capacity retention rate of each cell manufactured according to Preparation Example 3 using the positive electrode plate, in which the binder polymer prepared in each of Examples 1 to 8 and Comparative Example 1 was used, was measured. The results thereof are shown in Table 4 below.

Upon completion of 100 cycles, the capacity retention rate of each battery was calculated using Equation 2 below. [Equation 2] 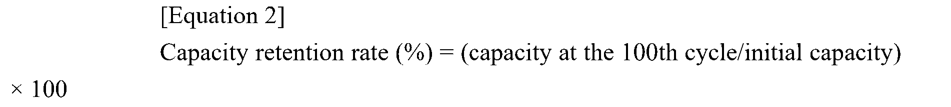 Capacity retention rate (%) = (capacity at the 100th cycle/initial capacity) × 100

**[Table 4]**

| Binder polymer | Capacity retention rate (%) after 100 cycles |
|---|---|
| Example 1 | 97.54 |
| Example 2 | 97.70 |
| Example 3 | 97.75 |
| Example 4 | 97.12 |
| Example 5 | 97.68 |
| Example 6 | 97.77 |
| Example 7 | 97.89 |
| Example 8 | 97.24 |
| Comparative Example 1 | 97.09 |

As shown in Table 4, the cells manufactured according to Preparation Example 3 using the positive electrode plate, in which the binder polymer prepared in each of Examples 1 to 8 was used, exhibited a capacity retention rate of 97.12% or more.

The cells manufactured according to Preparation Example 3 using the positive electrode plate, in which the binder polymer prepared in each of Examples 1 to 8, including a diamine monomer containing at least one carbonyl group in the backbone or side chain thereof, was used, were confirmed to exhibit a capacity retention rate that is equal to or improved compared to that of the cell manufactured according to Preparation Example 3 using the positive electrode plate, in which the polyamide binder polymer of Comparative Example 1 was used.

In the meantime, in the binder polymers of Examples 1 to 8, the highest capacity retention rate of 97.89% was confirmed to be exhibited when the content of DAAQ, a diamine monomer containing at least one carbonyl group in the backbone or side chain thereof, was 50 mol% based on 100 mol% of the total diamine monomer content.

These results confirm that the binder of the present application, including the polyamide polymer in which the molar ratio of DBP (or DAAQ), BAPS, and MBAA is appropriately adjusted, effectively reduces the internal resistance of the battery while improving the capacity retention rate thereof.

In addition, when the binder including the polyamide polymer of the present application is applied, it is confirmed that the properties of the secondary battery are improved.

The scope of the present disclosure is defined by the appended claims rather than the detailed description presented above. All changes or modifications derived from the meaning and scope of the claims and the concept of equivalents should be construed to fall within the scope of the present disclosure.

## Claims

1. A polyamide polymer comprising:
a first monomer unit containing a diamine residue having at least one carbonyl group on a backbone or side chain thereof.

2. The polyamide polymer of claim 1, wherein the first monomer unit is formed by polymerization of a diamine monomer containing at least one carbonyl group and two or more aromatic rings.

3. The polyamide polymer of claim 1, wherein the first monomer unit is formed by polymerization of an anthraquinone-based diamine monomer, an anthracenone-based diamine monomer, a benzophenone-based diamine monomer, an anthracene-1,4-dione-based diamine monomer, or a combination thereof.

4. The polyamide polymer of claim 3, wherein the anthraquinone-based diamine monomer is 2,7-diaminoanthraquinone, 2,6-diaminoanthraquinone, 1,4-diaminoanthraquinone, 1,5-diaminoanthraquinone, or a combination thereof,
the anthracenone-based diamine monomer is 3,6-diamino-9(10H)-anthracen-9-one, 2,6-diamino-9(10H)-anthracen-9-one, 1,4-diamino-9(10H)-anthracen-9-one, 1,5-diamino-9(10H)-anthracen-9-one, 2,7-diamino-9(10H)-anthracen-9-one, or a combination thereof,
the benzophenone-based diamine monomer is 4,4'-diaminobenzophenone, 3,3'-diaminobenzophenone, 4-amino-[(3-aminophenyl)benzophenone], or a combination thereof, and
the anthracene-1,4-dione-based diamine monomer is 5,8-diaminoanthracene-1,4-dione, 9,10-diaminoanthracene-1,4-dione, 5,9-diaminoanthracene-1,4-dione, or a combination thereof.

5. The polyamide polymer of claim 1, further comprising: a second monomer unit containing at least one aromatic ring.

6. The polyamide polymer of claim 1, further comprising:
a third monomer unit containing a sulfone, a fourth monomer unit containing a carboxylic acid, or a combination thereof.

7. The polyamide polymer of claim 5, wherein the second monomer unit is formed by polymerization of a terephthaloyl chloride monomer, an isophthaloyl chloride monomer, a phthalic acid monomer, an isophthalic acid monomer, a terephthalic acid monomer, or a combination thereof.

8. The polyamide polymer of claim 6, wherein the third monomer unit is formed by polymerization of bis[4-(4-aminophenoxy)phenyl]sulfone, bis(4-aminophenyl)sulfone, bis(3-aminophenyl)sulfone, 3,3'-diaminodiphenylsulfone, 3,4'-diaminodiphenylsulfone, 4,4'-diaminodiphenylsulfone, 1,3-bis(3-aminophenylsulfone)benzene, 1,3-bis(3-aminophenylsulfone), 1,3-bis(4-aminophenylsulfone)benzene, 1,3-bis(4-aminophenylsulfone), 1,4-bis(4-aminophenylsulfone)benzene, 1,4-bis(4-aminophenylsulfone), bis[3-(3-aminophenoxy)phenyl]sulfone, bis[3-(4-aminophenoxy)phenyl]sulfone, bis[4-(3-aminophenoxy)phenyl]sulfone, or a combination thereof.

9. The polyamide polymer of claim 6, wherein the fourth monomer unit is formed by polymerization of 5,5'-methylenebis(2-aminobenzoic acid) (MBAA), 3,5-diaminobenzoic acid (DABA), or a combination thereof.

10. The polyamide polymer of claim 6, wherein, based on 100 mol% of the total content of the first, third, and fourth monomer units, the first monomer unit is present in an amount in a range of 1 to 100 mol%.

11. The polyamide polymer of claim 6, wherein, based on 100 mol% of the total content of the first, third, and fourth monomer units, a content ratio of the first, third, and fourth monomer units (content of the first monomer unit:content of the third monomer unit:content of the fourth monomer unit) is in a range of 1 to 80 mol%:10 to 98 mol%:1 to 10 mol%.

12. The polyamide polymer of claim 1, wherein the polyamide polymer comprises a monomer repeating unit represented by Formula 1 below, 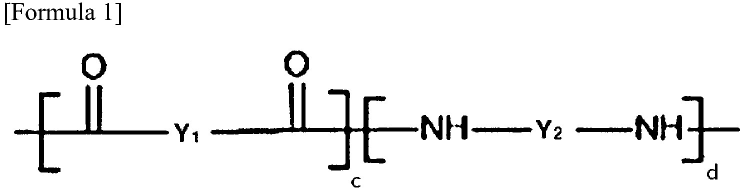 where in Formula 1,
Y₁ comprises at least one aromatic ring substituted with a halogen element, hydrogen, a hydroxyl group, a carboxyl group, a straight-chain or branched-chain hydrocarbon group having 1 to 4 carbon atoms, or a combination thereof,
Y₂ comprises: an aromatic ring having at least one carbonyl group on a backbone or side chain thereof; two aromatic rings linked to each other by -SO₂-; an aromatic ring substituted with at least one carboxyl group; or a combination thereof,
wherein the two aromatic rings linked to each other by -SO₂- are substituted with a halogen element, hydrogen, a hydroxyl group, a carboxyl group, a straight-chain or branched-chain hydrocarbon group having 1 to 4 carbon atoms, the hydrocarbon group being substituted or unsubstituted with a halogen element, or a combination thereof, and
c + d = 1 (wherein Y₂ necessarily comprises the aromatic ring having at least one carbonyl group on the backbone or side chain thereof).

13. A binder comprising:
the polyamide polymer of any one of claims 1 to 12.

14. A slurry comprising:
the binder of claim 13; and
an electrode active material.

15. An electrode comprising:
a current collector; and
an electrode active material layer formed on the current collector, the electrode active material layer comprising the binder of claim 13.

16. A separator comprising:
a porous substrate coated with a slurry composition comprising the binder of claim 13.

17. A secondary battery comprising:
the binder of claim 13.
